# EUROPEAN PATENT APPLICATION

(11) **EP 1 605 658 A1**
(43) Date of publication of application: **14.12.2005**
(21) Application number: 05253433.6
(22) Date of filing: 03.06.2005
(51) Int. Cl.: H04L 27/26

(54) **A bandwidth efficient orthogonal frequency division multiplexing communication system**

(30) Priority: 09.06.2004 US 864756
(71) Applicant: LUCENT TECHNOLOGIES INC., Murray Hill, New Jersey 07974-0636 (US)
(72) Inventor: Khan, Farooq Ullah, Monmouth, NJ 07726 (US)
(74) Representative: Sarup, David Alexander

(57) **Abstract**

In an OFDM communications system, cyclic prefix and postfix samples are used to improve the reliability of a received OFDM symbol. Typically, the prefix and postfix extensions are merely repeated portions of the OFDM symbol that are ordinarily discarded during the decoding process. In the instant invention, the cyclic prefix and postfix samples are not indiscriminately discarded, but rather, they are first analyzed to determine which, if any, have been corrupted. The corrupted samples are discarded, but the uncorrupted samples are combined with the corresponding portion of the OFDM symbol to improve the OFDM symbol demodulation/decoding reliability.

## Description

### BACKGROUND OF THE INVENTION

### 1. FIELD OF THE INVENTION

This invention relates generally to telecommunications, and more particularly, to wireless communications.

### 2. DESCRIPTION OF THE RELATED ART

Orthogonal Frequency Division Multiplexing (OFDM) modulation makes an efficient use of its radio spectrum by placing modulated subcarriers as close as possible without causing Inter-Carrier Interference (ICI). OFDM modulation has been adopted in various standards, most notably digital audio broadcast (DAB), digital video broadcast (DVB), asymmetric digital subscriber line (ADSL), IEEE LAN (802.11a and 802.11g) and IEEE MAN 802.16a. OFDM modulation is also being considered for various next generation wireless standards.

Typically, OFDM modulation transmits guard periods along with its data samples or symbol. Typically, the guard period consists of a cyclic prefix and/or cyclic postfix extension that is appended to either the beginning or ending of the symbol, and is intended to delay the transmission of the next symbol until such time as the effect of channel delay spread has diminished. By sizing the guard period for the worst case channel delay spread, the system reduces the likelihood that data contained in the symbol will be corrupted. Rather, only data in the guard period is corrupted, but the guard period data is commonly regarded as operating overhead and discarded regardless of whether it has actually been corrupted.

The effect of channel delay spread varies over time. That is, sometimes the entire guard period is corrupted, while at other times only a portion of the guard period is corrupted. Nevertheless, prior systems have typically discarded the entire guard period and made no effort to utilize the uncorrupted data for any additional purpose.

The present invention is directed to overcoming, or at least reducing, the effects of, one or more of the problems set forth above.

### SUMMARY OF THE INVENTION

In one embodiment of the present invention, a method is provided. The method comprises receiving a signal comprised of a symbol and a guard period. At least a portion of the symbol and the guard period are combined, and the combined symbol and guard period are then used for further processing of the symbol samples.

In an alternative embodiment of the present invention, a method is provided. The method comprises receiving a symbol comprised of a plurality of data samples and a guard period comprised of at least a portion of the plurality of data samples. At least a portion of the data samples contained in the guard period are combined with the data samples contained in the symbol, and the combined data samples are then used for further processing of the symbol samples.

### BRIEF DESCRIPTION OF THE DRAWINGS

The invention may be understood by reference to the following description taken in conjunction with the accompanying drawings, in which like reference numerals identify like elements, and in which:
Figure 1 illustrates a stylized representation of an OFDM transmitter chain;
Figure 2 illustrates a stylized representation of a inverse fast Fourier transform operation in the OFDM transmitter of Figure 1;
Figure 3 illustrates a stylized representation of an OFDM symbol with a prefix extension;
Figure 4 illustrates a stylized representation of an OFDM symbol with a postfix extension;
Figure 5 illustrates a stylized representation of an OFDM symbol with a both a prefix and a postfix extension;
Figure 6 illustrates a stylized representation of a fast Fourier transform operation in an OFDM receiver;
Figure 7 illustrates a stylized representation of an OFDM symbol with a prefix extension containing corrupted and uncorrupted samples; and
Figure 8 illustrates a stylized representation of a fast Fourier transform operation in an OFDM receiver.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Generally, the instant invention takes advantage of cyclic prefix and postfix samples to improve the reliability of a received OFDM symbol. Typically, the prefix and postfix extensions are merely repeated portions of the OFDM symbol that are ordinarily simply discarded during the decoding process. In the instant invention, the cyclic prefix and postfix samples are not indiscriminately discarded, but rather, they are first analyzed to determine which, if any, have been corrupted. The corrupted samples are discarded, but the uncorrupted samples are combined with the corresponding portion of the OFDM symbol to improve the OFDM symbol demodulation/decoding reliability.

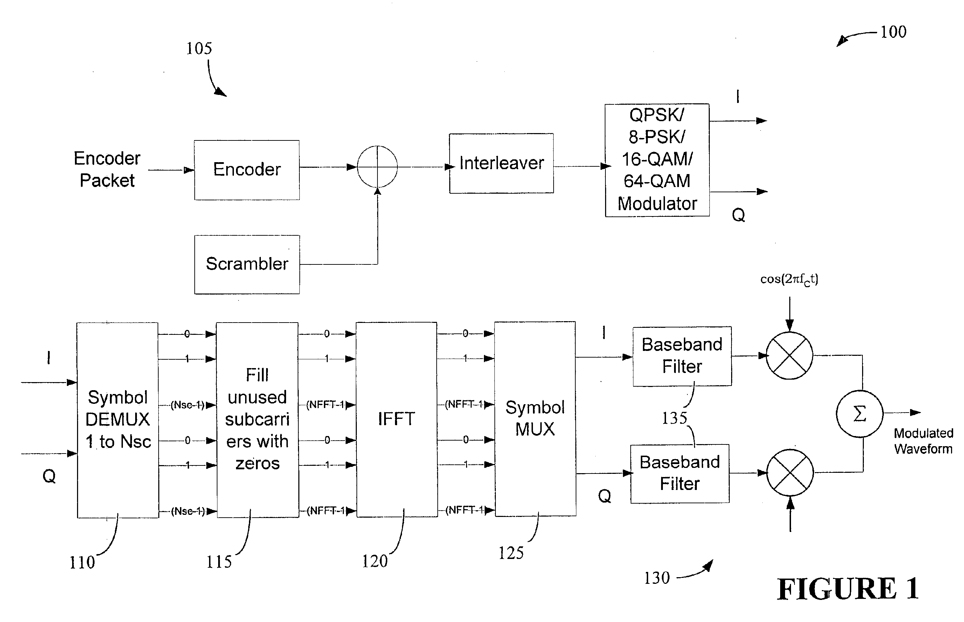

Figure 1 illustrates a stylized representation of a conventional OFDM transmitter chain 100. Generally, a set of information bits called an encoder packet is coded, interleaved and modulated into Q symbols and I symbols by hardware/software/firmware 105. A group of the I and Q symbols are serial-to-parallel converted by a de-multiplexer 110 and mapped to available subcarriers. Unused subcarriers are filled with zeros, and thus, carry no symbols, as stylistically represented at 115. At 120 an IFFT (Inverse Fast Fourier Transform) operation is performed on the subcarrier symbols and the resulting symbols are parallel-to-serial converted by a multiplexer 125 to form a time-domain signal that is quadrature modulated and converted to an RF frequency for transmission by hardware/software/firmware 130. In some embodiments of the OFDM transmitter chain 100, a baseband filter 135 may be employed prior to converting to the RF frequency.

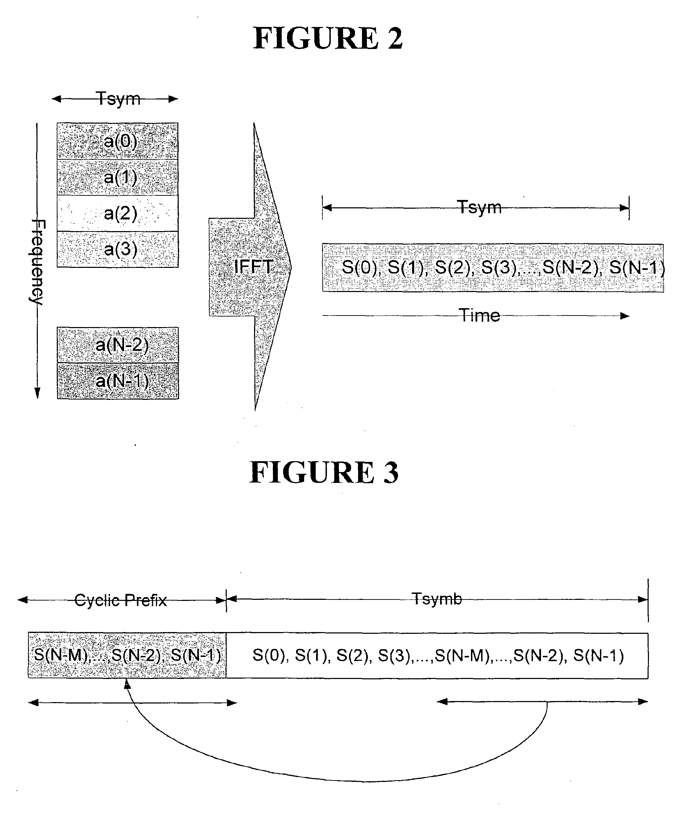

The IFFT operation of Figure 1 is further expanded in Figure 2. A total of N data symbols at the output of serial-to-parallel converter denoted as a(0), a(1), ..., a(N-1) are fed to the IFFT block. At the output of the IFFT block, we get another set of N symbols denoted as S(0), S(1), ..., S(N-1). These symbols are parallel-to-serial (multiplexed) converted to form a time-domain signal called an OFDM symbol.

OFDM is resilient to ISI (Inter-Symbol-Interference) because its symbol duration is longer compared to the symbol duration in single-carrier modulations such as CDMA and TDMA schemes. To further reduce the ISI, guard periods are appended to the OFDM symbol. The guard periods may be comprised of a cyclic prefix and/or cyclic postfix extension of the OFDM symbol. If the guard period is chosen such that its duration is longer than the channel delay spread, ISI can be completely eliminated. For example, the guard period typically contains unused information, and thus any reflections or interference that disrupts this unused information has no affect on the integrity of the OFDM symbol, as the information in the guard period would be ignored or discarded regardless of whether it was corrupted by interference.

In general, the guard period is selected to be larger than the worst case channel delay spread in the system. When the channel delay spread is less than the guard time, the delay spread introduces a different phase shift for each OFDM subcarrier but does not destroy the orthogonality among subcarriers. In general, the guard periods are formed by repeating a portion of an OFDM symbol. For example, a portion of the OFDM symbol may be extracted from the end and added to the beginning of the OFDM symbol as a prefix. Figure 3 shows data samples S(N-M) through S(N-1) being extracted or copied from the end of the OFDM symbol and appended to the beginning of the OFDM symbol to form prefix extension.

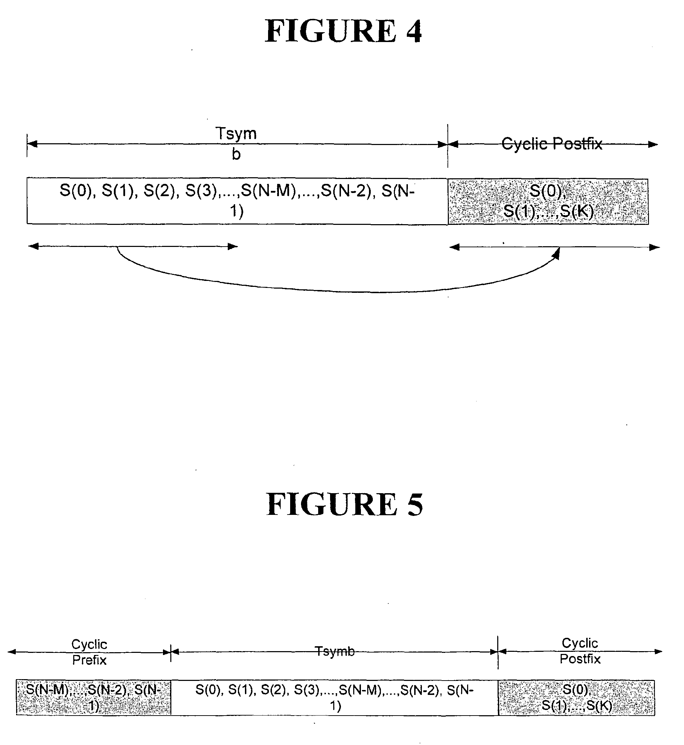

Another possibility is to extract a portion of OFDM symbol from the beginning and append it to the end as a postfix extension, as shown in Figure 4. Data samples S(0) through S(K) are shown being extracted from the OFDM symbol and appended to the end of the OFDM symbol as a postfix extension. In some applications it is may be useful to use a prefix and a postfix extension, as shown in Figure 5. Those skilled in the art will appreciate that the number of data samples that are extracted from the OFDM symbol and added as prefix/postfix extensions may vary substantially depending on the circumstances of the OFDM communications system being implemented, and the surrounding environment in which it is installed. The number of samples used in the guard periods depends significantly on the channel delay spread experienced by the OFDM communications system.

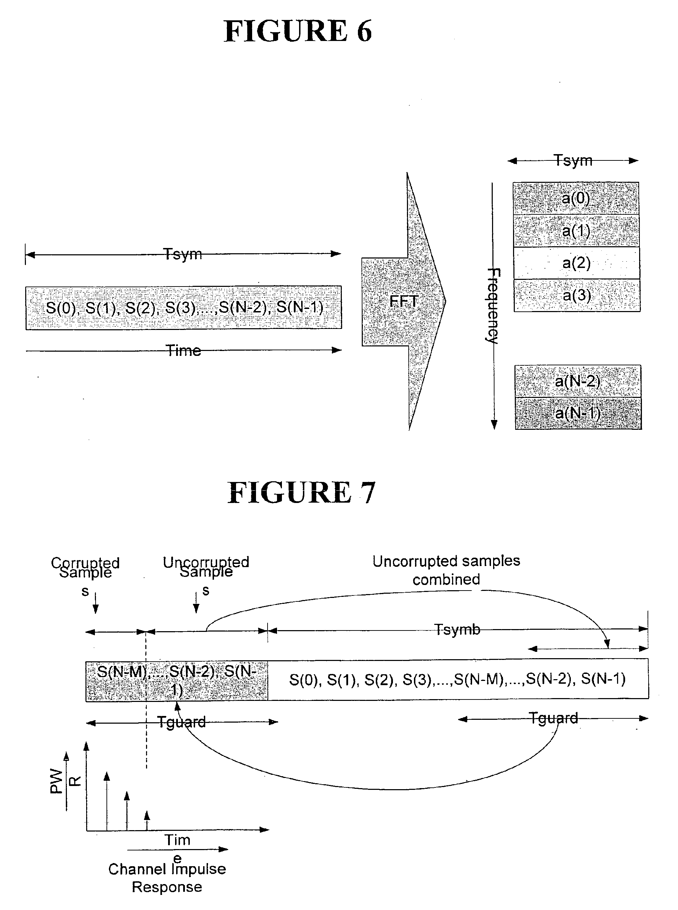

An example of FFT (Fast Fourier Transform) operation in an OFDM receiver is depicted in Figure 6. As discussed above, the cyclic prefix and/or postfix extensions have heretofore been discarded before the FFT operation, regardless of whether the guard period data was corrupted.

The number of guard period samples (cyclic prefix or postfix extensions) corrupted by the channel delay spread is first determined based on a channel impulse response estimate. The guard period samples deemed corrupted are discarded at the receiver. The remaining guard period samples are combined with the data samples in the OFDM symbol to improve the symbol demodulation/decoding reliability.

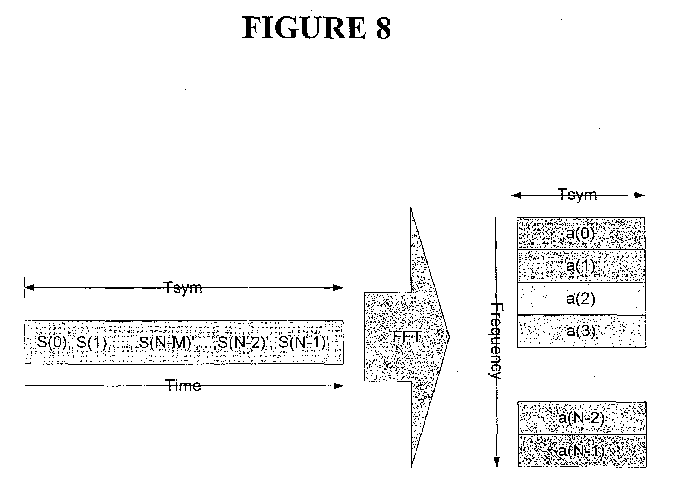

A stylistic representation of an exemplary methodology for combining cyclic prefix samples with the OFDM data samples is shown in Figure 7. In the illustrated embodiment, the prefix extension is comprised of samples S(N-M) through S(N-1), which, under ideal conditions, may be combined with samples S(N-M) through S(N-1) in the OFDM symbol, respectively. In illustrated example, however, S(N-M) has been identified as corrupted, whereas the remaining samples are uncorrupted. Thus, the corrupted sample is discarded and the uncorrupted samples, which are copies of the data samples from the last part of the OFDM symbol, are combined, improving the Es/No (symbol-energy to noise spectral density ratio) for these samples. After combining the uncorrupted cyclic prefix data samples with the OFDM data samples, a total of N samples are obtained. Under ideal conditions, all the M cyclic prefix samples may be combined with samples S(N-M) through S(N-1) in the OFDM symbol resulting in a new sequence of samples S(1), S(2),...S'(N-M),...S'(N-2),S'(N-1). These N samples are then used as an input to the FFT, as shown in Figure 8.

The number of guard period samples corrupted due to channel delay spread may be determined based on channel impulse response estimates. The channel impulse response can be estimated from conventional pilot symbols as is well known to those of ordinary skill in the art. The pilot symbols can be provided in the time-domain, in the frequency domain or in both the time and frequency domains.

Various well known methods can be used for combining the guard period samples with the OFDM data samples. Some examples are MRC (Maximum Ratio Combining), Zero-Forcing and MMSE (Minimum Mean Square Error), and the like. Alternatively, in some applications, it may be useful to simply replace the corresponding samples in the OFDM symbol with the uncorrupted samples from the guard period.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method, comprising:
receiving a signal comprised of a symbol and a guard period;
selectively combining at least a portion of the symbol and the guard period; and
processing the symbol using the combined symbol and guard period.

2. A method, as set forth in claim 1, wherein receiving the signal comprised of the symbol and the guard period further comprises receiving a symbol comprised of a plurality of data samples and a guard period comprised of at least a portion of the plurality of data samples.

3. A method, as set forth in claim 2, wherein selectively combining at least a portion of the symbol and the guard period further comprises combining at least a portion of the data samples contained in the guard period with the data samples contained in the symbol.

4. A method, as set forth in claim 3, further comprising identifying uncorrupted data samples within the guard period and wherein combining at least a portion of the data samples contained in the guard period with the data samples contained in the symbol further comprises combining the uncorrupted data samples with the data samples contained in the symbol.

5. A method, as set forth in claim 1, wherein selectively combining at least a portion of the symbol and the guard period further comprises applying maximum ratio combining to at least a portion of the symbol and the guard period.

6. A method, as set forth in claim 1, wherein selectively combining at least a portion of the symbol and the guard period further comprises applying zero-forcing to at least a portion of the symbol and the guard period.

7. A method, as set forth in claim 1, wherein selectively combining at least a portion of the symbol and the guard period further comprises applying a minimum mean square error detection to at least a portion of the symbol and the guard period.

8. A method, as set forth in claim 1, wherein processing the symbol using the combined symbol and guard period further comprises performing a fast Fourier transform using the combined symbol and guard period.
